# EUROPÄISCHE PATENTANMELDUNG

(11) **EP 2 498 327 A2**
(43) Veröffentlichungstag der Anmeldung: **12.09.2012**
(21) Anmeldenummer: 12158114.4
(22) Anmeldetag: 05.03.2012
(51) Int. Cl.: H01M 4/88

(54) **Verfahren zur Herstellung von Sauerstoffverzehrelektroden**

(30) Priorität: 11.03.2011 DE 102011005454
(71) Anmelder: Bayer MaterialScience AG, 51368 Leverkusen (DE)
(72) Erfinder: Bulan, Andreas, 40764 Langenfeld (DE); Klesper, Walter, 51467 Bergisch Gladbach (DE)

(57) **Zusammenfassung**

Es wird ein Verfahren für die Herstellung von Sauerstoffverzehrelektroden, insbesondere für den Einsatz in der Chloralkali-Elektrolyse beschrieben, mit einem Einsatz spezieller Walzen für die Verfestigung der Katalysatormasse auf dem Trägerelement der Elektrode.

## Beschreibung

Die Erfindung betrifft ein Verfahren für die Herstellung von Sauerstoffverzehrelektroden, insbesondere für den Einsatz in der Chloralkali-Elektrolyse, mittels Einsatz spezieller Walzen für die Verfestigung der Katalysatormasse auf dem Trägerelement. Die Erfindung betrifft ferner die Verwendung der nach diesem Verfahren hergestellten Sauerstoffverzehrelektroden in der Chloralkali-Elektrolyse oder Brennstoffzellentechnik.

Die Erfindung geht aus von an sich bekannten Herstellungsverfahren für Sauerstoffverzehrelektroden, die als flächige Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzten. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.-% und gegenüber reinem Sauerstoff bei einer Temperatur von typischerweise 80 - 90°C. Ebenso wird ein hohes Maß an mechanischer Stabilität gefordert, dass die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators. Geeignete hydrophobe und hydrophile Poren und eine entsprechende Porenstruktur zur Leitung von Gas und Elektrolyt sind ebenso notwendig, wie eine Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Eine bevorzugtes Verfahren zur Herstellung von Sauerstoffverzehrelektroden ist in DE3710168A1 beschrieben. Bei diesem Verfahren wird ein Gemisch aus Katalysator und polymerer Komponente zu feinen Partikeln vermahlen. Das Pulvergemisch wird anschließend zu einem Flächengebilde verdichtet und das Flächengebilde dann durch Verpressen auf ein elektrisch leitendes Trägerelement aufgebracht.

Die Verdichtung der Partikel zu einem Flächengebilde und auch die Verpressung des Flächengebildes auf das Trägerelement erfolgen dabei beispielsweise mittels einer Walzenpresse oder mit einem Kalander.

DE 10148599A1 nennt eine Reihe von besonderen Bedingungen für die Verdichtung von Katalysator und Polymer zu einem stabilen Flächengebilde:
Der Walzenspalt während des Walzprozesses der Pulvermischung kann mit einer Zuhaltekraft der Walzen im Bereich von 0,2 N/cm bis 15 N/cm konstant gehalten werden;
Die Oberflächenrauhigkeit der Walzenkörper kann 0,05 bis 1,5 µm betragen;
Die Umfanggeschwindigkeit der Walzen während des Walzprozesses kann 0,05 bis 15 m/min betragen;
Der Walzendurchmesser kann bei einer Zuhaltekraft von bis zu 15 kN/cm bis zu 30 cm betragen;
Der eingestellte Walzenspalt kann 0,005 bis 0,45 mm betragen;
Die Walzenkörper können kühlbar ausgeführt sein.

Entsprechend der Lehre der DE 10148599A1 lassen sich nach diesem Verfahren Sauerstoffverzehrelektroden mit einer Breite von 30-40 cm und einer Länge von 2 - 3 m herstellen.

Aus der EP 1728896 A2 ist ein anderes Verfahren bekannt, bei welchem ein gemahlenes Gemisch aus Katalysator und polymerer Komponente direkt auf ein elektrisch leitendes Trägerelement aufgebracht wird und dann mit dem Trägerelement verpresst wird.

Die Kräfte beim Verpressen sind hierbei im Bereich 0,01 bis 7 kN/cm möglichst niedrig zu halten. Aus der EP 1728896 A2 entnimmt man, dass das beschriebene Herstellungsverfahren mittels Walzen unabhängig vom Werkstoff, der Oberflächenrauhigkeit und von dem Durchmesser der zum Verpressen verwendeten Walzen ist.

Nachteilig bei den vorgenannten bekannten Verfahren, die die Herstellung mittels Walzen vorsehen, ist, dass die komprimierte Katalysatorschicht leicht an der Oberfläche der Walzen haftet. Hierdurch muss der Walzprozess öfters unterbrochen werden. Die Walzen müssen von anhaftendem edelmetallhaltigem Katalysatorgemisch gereinigt werden, fehlerhafte Elektroden müssen aussortiert werden, die wertvolle Beschichtung der aussortierten Elektroden muss aufwändig recycliert werden.

Für die Herstellung einer kleinen Anzahl von Elektroden für Laboranlagen in kleinem Maßstab sind solche Unzulänglichkeiten in Maßen tolerierbar. Für die Fertigung großflächiger Elektroden im industriellen Maßstab jedoch sind solche Verfahren mit häufigen Unterbrechungen und hohen Ausschussraten völlig ungeeignet.

Aus der DE 10157521 A1, ist bekannt geworden, dass Anhaftungen von Katalysatormasse an den Presswalzen durch Behandeln der Walzen mit speziellen organischen Verbindungen in gewissen Umfang vermieden werden könnten. Durch Behandlung der Walzenoberfläche mit den Substanzen lassen sich demnach Sauerstoffverzehrelektroden in einer Breite von 40 cm und einer Länge von 2 m herstellen.

Nun ist es für die Herstellung von SVE im industriellen Maßstab erforderlich, Elektroden in einer wesentlich größeren Breite als 40 cm herzustellen. Für herkömmliche Membranelektrolyseure sind Elektroden in einer Breite von typischerweise über einem Meter, teilweise in einer Breite von bis zu 2 Metern gebräuchlich. Auch sollte die Länge der Beschichtung möglichst nicht durch das Herstellungsverfahren begrenzt sein.

Das in DE 10157521 A1 beschriebene Verfahren hat sich für einen kontinuierlichen Herstellprozess als zu aufwändig herausgestellt. Der Pressvorgang muss immer wieder zwecks Flüssigkeitsbehandlung der Walzen unterbrochen werden, die Walzen müssen mit den organischen Flüssigkeiten abgewaschen und getrocknet werden. Durch Verdunstung der organischen Komponenten wird die Umgebungsluft belastet, wodurch wiederum spezielle Absaug- und Luftreinigungsinstallationen erforderlich werden.

Die Aufgabe der vorliegenden Erfindung besteht darin, ein Herstellverfahren für Sauerstoffverzehrelektroden, insbesondere für den Einsatz in der Chloralkali-Elektrolyse, zu finden, welches für größere Flächen und Stückzahlen kontinuierlich betrieben werden kann und welches die oben beschriebenen Nachteile der bekannten Herstellungsverfahren und der daraus hergestellten Elektroden nicht aufweist, insbesondere die aufwändige Verwendung von Antihaftmitteln.

Spezielle Aufgabe der Erfindung ist es ein Verfahren zum Verpressen von Katalysatormassen bereitzustellen, welches ohne Störungen durch Anhaftungen an den Presswalzen betrieben werden kann. bereitzustellen, mit welchem sich Elektroden in eine Breite von > 1,5 m in einem kontinuierlichen Verfahren herstellen lassen.

Die Aufgabe wird dadurch gelöst, dass für die Verdichtung und Verpressung in einer Walzenpresse erfolgt, bei welchem die Presswalze mit Wolframcarbid beschichtet ist und eine Oberflächenrauhigkeit von maximal 0,5 µm haben.

Gegenstand der Erfindung ist ein Herstellverfahren für Sauerstoffverzehrelektrode, mit den Schritten:
a) Herstellen einer Pulvermischung bestehend mindestens aus einem Polymer als Binder, bevorzugt aus Polytetraflourethylen (PTFE), und einer katalytisch aktiven Komponente, bevorzugt eine Komponente die Silberoxid und /oder Silber als katalytisch aktives Material aufweist,
b) Aufbringen der Pulvermischung auf ein elektrisch leitendes flächiges Trägerelement,
c) Verdichten und Verfestigen der Pulvermischung auf dem Trägerelement durch Walzen,
dadurch gekennzeichnet, dass die beim Verdichten c) verwendeten verdichtenden Walzen eine Oberflächenbeschichtung mit Wolframcarbid aufweisen und eine Rauhigkeit der Walzenoberfläche von höchstens 0,5 µm, besonders bevorzugt von 0,1 bis 0,35µm aufweisen.

Die Pulvermischung besteht wenigstens aus einem Katalysator und einem Binder. Als Katalysator wird bevorzugt Silber, Silber-I-Oxid oder Silber-II-Oxid, oder deren Gemische eingesetzt. Bei dem Binder handelt es sich um ein Polymer, bevorzugt um fluorierte Polymere, besonders bevorzugt um Polytetrafluorethylen (PTFE). Besonders bevorzugt werden Pulvermischungen eingesetzt, die 70 bis 95 Gew.-% Silber-I-oxid, 0-15 Gew.-% Silber-Metall-Pulver und 3 - 15 Gew.-% fluorierte Polymere, insbesondere PTFE, enthalten.

Das Trägerelement kann insbesondere in Form eines Netzes, Vlieses, Schaums, Gewebes, Geflechts, Gewirks, Streckmetall oder eines anderen durchlässigen flächigen Gebildes eingesetzt werden. Bevorzugt wird ein flexibles textiles Gebilde insbesondere aus Metallfäden eingesetzt. Als Material für das Trägerelement sind Nickel und mit Silber beschichtetes Nickel besonders geeignet.

Die Zubereitung und Aufbringung der Pulvermischung auf das Trägerelement erfolgt in einer bevorzugten Ausführung analog der in EP1728896A2 beschriebenen Verfahrensweise.

Die mit Wolframcarbid beschichteten Walzen ziehen den mit Pulver beschichteten Träger überraschend gut ein, ohne dass es zu Anhaftungen von Pulvermischung an den Walzen kommt. Es ergibt sich eine gleichmäßige, stabile Beschichtung der Pulvermasse auf dem Trägerelement.

Mit Wolframcarbid beschichtete Walzen zeigen insbesondere eine geringe Haftungsneigung gegenüber Pulvergemischen aus PTFE und einem Gemisch von Silberoxid und Silber, wie sie bevorzugt für die Herstellung von Sauerstoffverzehrelektroden eingesetzt werden. Die Haftung ist andererseits jedoch hinreichend genug, um einen guten Einzug der Pulvermischung in den Walzenspalt und einen Transport der verdichteten Pulvermischung zu gewährleisten. Die Härte von Wolframcarbid ist zudem vergleichsweise hoch, so dass die Walzen keinen Schaden durch eventuell vorhandene größere Partikel z.B. an Silberoxid nehmen. Größere Silberoxid-Partikel werden durch den Druck der Walze in kleinere Teile zerteilt.

Die Beschichtung der Walzen, die typischerweise aus Edelstahl gefertigt sind erfolgt bevorzugt im sogenannten Flammspritzverfahren, besonders bevorzugt im Plasmaspritzverfahren. Die Beschichtung wird bevorzugt induktiv gehärtet. Die Härte der bevorzugt einzusetzenden Walze beträgt bevorzugt mindestens 70 Rockwell.

Die Walzen weisen eine Oberflächenrauhigkeit nach DIN EN ISO 4287 von Ra ≤ 0,5 µm, bevorzugt Ra ≤ 0,35 µm besonders bevorzugt Ra 0,1 - 0,35 µm auf. Eine höhere Rauhigkeit führt zu Unebenheiten auf der Elektrodenoberfläche, welche die Leistung der Elektrode beeinträchtigen können. Eine weitere Reduzierung der Rauhigkeit weit unter Ra 0,1 µm bringt keine weiteren Vorteile in der Qualität der Elektroden, jedoch steigt bei einer Rauhigkeit unter Ra 0,1 µm der Aufwand für das Fertigen und Schleifen der Walzen unverhältnismäßig stark an.

Die Verdichtung der Katalysatormassen auf dem Trägerelement erfolgt bevorzugt in einem Durchlauf durch mindestens ein Walzenpaar. Hier wird bevorzugt für beide Walzen eine Wolframcarbid-beschichtete Ausführung gewählt. Bei Elektroden, bei welchen sich die Katalysatorschicht nur auf einer Seite des elektrisch leitenden Trägerelements befindet, kann es ausreichend sein, wenn nur eine, der Katalysatorschicht zugewandte Walze mit Wolframcarbid beschichtet ist.

Die Walzen werden in einem bevorzugten Verfahren beide mit gleicher Rotationsgeschwindigkeit aktiv angetrieben. Es sind aber auch Anordnungen möglich, bei welchen nur eine der Walzen angetrieben wird und die zweite Walze ohne einen eigenen Antrieb mitläuft.

Für die Verdichtung c) des Pulvermaterials kann jedoch grundsätzlich auch nur eine Walze die auf eine an sich flache Unterlage einwirkt eingesetzt werden, wobei entweder die Unterlage oder die Walze bewegt wird.

Für die Herstellung von Elektroden in größeren Stückzahlen wird die Anwendung eines kontinuierlichen Verfahrens bevorzugt.

Ein solches Verfahren wird bevorzugt eine kontinuierliche Beschichtung und Verpressung mittels eines Kalanders aufweisen. Besonders bevorzugt ist ein Verfahren, bei welchem das Trägerelement kontinuierlich, z.B. von einer Rollenform, angeliefert wird, dann kontinuierlich in die Beschichtungseinheit eingezogen wird und im Anschluss mit der Elektrodenpulvermischung verpresst wird.

Die Elektroden können dann auf Maß geschnitten werden, oder aber für einen späteren Zuschnitt aufgerollt werden. Ein solches kontinuierliches Vorgehen zur Herstellung eines Flächengebildes, aber ohne die hier beschriebene bevorzugte direkte Beschichtung des leitenden Trägers, ist in der Schrift DE10130441B4 grundsätzlich skizziert.

Für kleinere Stückzahlen wird man zumindest ein teilkontinuierliches Verfahren anstreben, bei welchem mehrere Elektroden beschichtet und verpresst werden.

Die Rundlaufgenauigkeit der Walzen in zusammengebautem Zustand weist eine Abweichung von bevorzugt höchstens ±0,001mm auf.

Die Linienkraft, die während des Verdichtens c) auf das Pulvermaterial und das Trägerelement wirkt, beträgt bevorzugt 0,2 bis 2kN/cm.

Der Walzenspalt wird bevorzugt so eingestellt, dass er unter Kraft 0,2 bis 0,8mm beträgt.

Die Walzengeschwindigkeit (gleich Umfangsgeschwindigkeit der Walzen) beim Verdichten c) beträgt bevorzugt 0,1-20 m/min, besonders bevorzugt 1-15 m/min.

Es sind Walzenbreiten von bis zu 2 m und darüber möglich. Die Walzen sind bevorzugt so ausgelegt, dass sie an einen Heiz/Kühlkreislauf angeschlossen werden können. Hiermit kann z.B. die Temperaturbelastung der Pulvermischung begrenzt werden. Bevorzugt wird das Verdichten bei einer Temperatur der Walzen von höchstens 80 °C, bevorzugt höchstens 55 °C, besonders bevorzugt höchstens 30 °C durchgeführt, bei der sich beispielsweise eine PTFE / Silber / Silberoxid-Mischung am besten verarbeiten lässt.

Die Verdichtung der Katalysatormasse erfolgt in einem Verdichtungsverhältnis von 2,5 : 1 bis 6:1, bevorzugt 3 : 1 bis 4 : 1. Das heißt, dass bei einem Verhältnis von 3 : 1 die auf das Trägerelement aufgebrachte Mischung aus katalytisch wirkender Komponente und polymeren Binder auf ein Drittel der ursprünglichen Höhe der Schüttung komprimiert wird.

Die nach dem neuen Verfahren hergestellte Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die nach dem neuen Verfahren hergestellte Sauerstoffverzehrelektrode bevorzugt als Kathode in einer Brennstoffzelle geschaltet werden.

Weiterer Gegenstand der Erfindung ist daher die Verwendung der nach dem neuen Verfahren hergestellte Sauerstoffverzehrelektrode zur Reduktion von Sauerstoff im Alkalischen eingesetzt werden, insbesondere in der alkalischen Brennstoffzelle, die Verwendung bei der Trinkwasseraufbereitung, beispielsweise zur Herstellung von Natriumhypochlorit oder die Verwendung in der Chlor-Alkalielektrolyse, insbesondere zur Elektrolyse von LiCl, KCl oder NaCl.

Die neue nach dem neuen Verfahren hergestellte Sauerstoffverzehrelektrode wird besonders bevorzugt bei der Chlor-Alkali-Elektrolyse und hier insbesondere bei der Natriumchlorid-(NaCl)-Elektrolyse eingesetzt.

Die Erfindung wird nachfolgend anhand der Figuren durch die Beispiele, welche jedoch keine Beschränkung der Erfindung darstellen, näher erläutert.

### Beispiele

### Beispiel 1

3,5 kg einer Pulvermischung, bestehend aus 7 Gew.-% PTFE-Pulver, 88 Gew.-% Silber 1-Oxid und 5 Gew.-% Silberpulver des Typs 331 der Fa. Ferro, wurden in einem Mischer der Fa. Eirich, Typ R02, ausgerüstet mit einem Stemwirbler als Mischelement, bei einer Drehzahl von 6000 U/min so gemischt, dass die Temperatur der Pulvermischung 55°C nicht übersteigt. Dies wurde dadurch erreicht, dass der Mischvorgang unterbrochen und die Mischung in einem Kühlraum abgekühlt wurde. Insgesamt wurde das Mischen dreimal durchgeführt. Nach dem Mischen wurde die Pulvermischung durch ein Feinsieb mit einer Maschenweite von 1,0 mm gesiebt.

Die gesiebte Pulvermischung wurde anschließend auf ein Netz aus versilberten Nickeldraht mit einer Drahtdicke von 0,25 mm und einer Maschenweite von 0,5 mm aufgebracht. Die Fläche betrug 25 x 30 cm. Das Aufbringen erfolgte mit Hilfe einer 2 mm dicken Schablone, wobei das Pulver mit einem Sieb mit einer Maschenweite von 1 mm aufgebracht wurde. Überschüssiges Pulver, das über die Dicke der Schablone hinausragte, wurde mittels Abstreifer entfernt.

Nach Entfernung der Schablone wurde der Träger mit der aufgebrachten Pulvermischung in eine Walzenpresse, bestehend aus 2 glatten, verchromten Walzen mit 13 cm Durchmesser eingeführt. Die Einzugsgeschwindigkeit betrug 140 cm/min, die Anpresskraft 0,45 kN/cm. Die Elektrode hatte nach der Verpressung eine Höhe von 0,5 mm

Die Oberwalze zeigte Anhaftungen von Katalysatormasse, an einigen Stellen traten diese auch an der unteren Walze auf. Die Elektrode wies an einigen Stellen, besonders auf der oberen (Beschichtungsseite) Fehlstellen ohne ausreichend Beschichtung auf. Die Elektrode für eine Elektrolyse unbrauchbar.

### Beispiel 2

Es wurde wie in Beispiel 1 ein Drahtnetz mit der gleichen Pulvermischung beaufschlagt.

Der Träger mit der aufgebrachten Pulvermischung wurde in eine Walzenpresse, bestehend aus zwei Stahlwalzen mit 13 cm Durchmesser eingeführt. Die Walzen waren im Flammspritzverfahren mit Wolframcarbid beschichtet worden und auf eine Oberflächenrauhigkeit von Ra 0,25µm (gemessen nach DIN EN ISO 4287) geschliffen. Die Einzugsgeschwindigkeit der Walzen betrug 140 cm/min, die Anpresskraft 0,45 kN/cm, die Elektrode wurde auf 0,52 mm Dicke verdichtet.

Weder Oberwalze noch Unterwalze zeigten Anhaftungen von Katalysatormasse. Die Elektrode war fehlerlos und gebrauchsfertig.

## Patentansprüche

1. Verfahren zur Herstellung einer Sauerstoffverzehrkathode mit den Schritten:
a) Herstellen einer Pulvermischung bestehend mindestens aus einem Polymer als Binder, bevorzugt aus einem fluorierten Polymer, besonders bevorzugt aus Polytetraflourethylen (PTFE), und einer katalytisch aktiven Komponente, bevorzugt eine Komponente die Silberoxid und /oder Silber als katalytisch aktives Material aufweist,
b) Aufbringen der Pulvermischung auf ein elektrisch leitendes flächiges Trägerelement,
c) Verdichten und Verfestigen der Pulvermischung auf dem Trägerelement durch Walzen,
**dadurch gekennzeichnet, dass** die beim Verdichten c) verwendeten verdichtenden Walzen eine Oberflächenbeschichtung mit Wolframcarbid aufweisen und eine Rauhigkeit der Walzenoberfläche von höchstens 0,5 µm, besonders bevorzugt von 0,1 bis 0,35µm aufweisen.

2. Verfahren nach Anspruch 1, **dadurch gekennzeichnet, dass** die Verdichtung c) der Pulvermischung im Verdichtungsverhältnis von 2,5 : 1 bis 6:1, bevorzugt im Verhältnis von 3 : 1 bis 4 : 1 erfolgt.

3. Verfahren zur Herstellung von Sauerstoffverzehrelektroden nach einem Verfahren gemäß einem der Ansprüche 1 bis 2, **dadurch gekennzeichnet, dass** beim Verdichten c) mindestens ein Paar von übereinander stehenden Walzen verwendet wird, von dem insbesondere beide Walzen mit einem Motor angetrieben werden.

4. Verfahren zur Herstellung von Sauerstoffverzehrelektroden nach einem Verfahren gemäß einem der Ansprüche 1 bis 3, **dadurch gekennzeichnet, dass** beim Verdichten c) mindestens ein Paar von übereinander stehenden Walzen verwendet wird, von dem die obere Walze zur Einstellung des Verdichtungsverhältnisses zur unteren Walze verschiebbar gelagert ist..

5. Verfahren zur Herstellung von Sauerstoffverzehrelektroden nach einem Verfahren gemäß einem der Ansprüche 1 bis 4, **dadurch gekennzeichnet, dass** beim Verdichten c) eine Linienkraft von 0,2 bis 2 kN/cm verwendet wird.

6. Verfahren zur Herstellung von Sauerstoffverzehrelektroden nach einem Verfahren gemäß einem der Ansprüche 1 bis 5, **dadurch gekennzeichnet, dass** als katalytisch aktive Komponente Pulver aus Silber, Silber-I-Oxid oder Silber-II-Oxid, oder Gemische von Silber- und Silberoxidpulvern eingesetzt werden

7. Verfahren zur Herstellung von Sauerstoffverzehrelektroden nach einem Verfahren gemäß einem der Ansprüche 1 bis 6, **dadurch gekennzeichnet, dass** Pulvermischungen eingesetzt werden, die 70 bis 95 Gew.-% Silber-I-oxid, 0-15 Gew.-% Silber-Metall-Pulver und 3 - 15 Gew.-% fluorierte Polymere, insbesondere PTFE, enthalten.

8. Verfahren zur Herstellung von Sauerstoffverzehrelektroden nach einem Verfahren gemäß einem der Ansprüche 1 bis 7, **dadurch gekennzeichnet, dass** als Trägerelement ein flexibles textiles Gebilde insbesondere aus Metallfäden, bevorzugt aus Nickel oder und mit Silber beschichtetes Nickel eingesetzt wird.

9. Verfahren zur Herstellung von Sauerstoffverzehrelektroden nach einem Verfahren gemäß einem der Ansprüche 1 bis 8, **dadurch gekennzeichnet, dass** die Linienkraft, die während des Verdichtens c) auf das Pulvermaterial und das Trägerelement wirkt, 0,2 bis 2kN/cm beträgt.

10. Verfahren zur Herstellung von Sauerstoffverzehrelektroden nach einem Verfahren gemäß einem der Ansprüche 1 bis 9, **dadurch gekennzeichnet, dass** der Spalt zwischen den Presswalzen so eingestellt wird, dass er unter Kraft 0,2 bis 0,8 mm beträgt.

11. Verfahren zur Herstellung von Sauerstoffverzehrelektroden nach einem Verfahren gemäß einem der Ansprüche 1 bis 9, **dadurch gekennzeichnet, dass** die Umfanggeschwindigkeit der Walzen beim Verdichten c) 0,1 - 20 m/min, bevorzugt 1 - 15 m/min beträgt.

12. Verwendung der nach einem Verfahren gemäß einem der Ansprüche 1 bis 11 gefertigten Sauerstoffverzehrelektrode als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

13. Sauerstoffverzehrelektrode erhalten aus einem Verfahren gemäß einem der Ansprüche 1 bis 11.

14. Elektrolysevorrichtung, insbesondere für die Chloralkalielektrolyse, aufweisend eine nach einem Verfahren gemäß einem der Ansprüche 1 bis 11 gefertigte Sauerstoffverzehrelektrode als Sauerstoff verzehrende Kathode.
